# EUROPEAN PATENT APPLICATION

(11) **EP 4 159 688 A2**
(43) Date of publication of application: **05.04.2023**
(21) Application number: 22199252.2
(22) Date of filing: 30.09.2022
(51) Int. Cl.: C01G 53/00, H01M 4/525

(54) **POSITIVE ELECTRODE ACTIVE MATERIAL FOR RECHARGEABLE LITHIUM BATTERY, METHOD OF PREPARING THE SAME, AND RECHARGEABLE LITHIUM BATTERY**

(30) Priority: 30.09.2021 KR 20210129532
(71) Applicant: Samsung SDI Co., Ltd., Yongin-si, Gyeonggi-do 17084 (KR)
(72) Inventor: YUN, Pilsang, 17084 Yongin-si (KR); KIM, Jongmin, 17084 Yongin-si (KR); KIM, Hyunbeom, 17084 Yongin-si (KR); PARK, Sangin, 17084 Yongin-si (KR); LEE, Hanseul, 17084 Yongin-si (KR)
(74) Representative: Marks & Clerk LLP

(57) **Abstract**

Provided are a positive electrode active material for a rechargeable lithium battery, a method of preparing the same, and a rechargeable lithium battery including the same, the positive electrode active material for a rechargeable lithium battery including, as a lithium nickel-based composite oxide, a secondary particle in which a plurality of primary particles is aggregated, wherein at least a portion of the primary particles is arranged radially, a boron coating layer disposed on the surface of the secondary particles and containing lithium borate, and a boron-doped layer inside the primary particle exposed to the surface of the secondary particle.

## Description

### BACKGROUND OF THE INVENTION

### (a) Field of the Invention

A positive electrode active material for a rechargeable lithium battery, a method of preparing the same, and a rechargeable lithium battery including the same are disclosed.

### (b) Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive electrode active materials have been investigated to realize rechargeable lithium batteries for applications to the uses. Among them, lithium nickel-based oxide, lithium nickel manganese cobalt composite oxide, lithium nickel cobalt aluminium composite oxide, lithium cobalt oxide, and the like are mainly used as a positive electrode active material. However, these positive electrode active materials have structure collapses or cracks during the repeated charges and discharges and thus have problems of deteriorating a long-term cycle-life of a rechargeable lithium battery and increasing resistance and thus exhibit no satisfactory capacity characteristics. Accordingly, development of a novel positive electrode active material securing long-term cycle-life characteristics as well as realizing high capacity and high energy density is required.

### SUMMARY OF THE INVENTION

A positive electrode active material for a rechargeable lithium battery with improved cycle-life characteristics while implementing a high capacity, a preparing method thereof and a rechargeable lithium battery including the same are provided.

In an embodiment, a positive electrode active material for a rechargeable lithium battery includes a lithium nickel-based composite oxide, wherein the positive electrode active material includes a secondary particle in which a plurality of primary particles is aggregated, wherein at least a portion of the primary particles is arranged radially, a boron coating layer disposed on the surface of the secondary particles and containing lithium borate, and a boron-doped layer inside the primary particle exposed to the surface of the secondary particle.

In another embodiment, a method of preparing a positive electrode active material for a rechargeable lithium battery includes mixing a nickel-based hydroxide, a lithium raw material, and a boron raw material and heat-treating the resultant.

In another embodiment, a rechargeable lithium battery includes a positive electrode including the aforementioned positive electrode active material, a negative electrode, a separator between the positive electrode and the negative electrode, and an electrolyte.

At least some of the above and other features of the invention are set out in the claims.

The positive electrode active material for a rechargeable lithium battery according to an embodiment and a rechargeable lithium battery including the same may exhibit excellent cycle-life characteristics while realizing high capacity and high energy density.

### BRIEF DESCRIPTION OF THE DRAWINGS

FIG. 1 is a schematic view showing the shape of a plate-shaped primary particle.
FIG. 2 is a view for explaining the definition of a radial arrangement in secondary particles.
FIG. 3 is a schematic view showing a cross-sectional structure of a secondary particle according to an embodiment.
FIG. 4 is a cross-sectional view schematically illustrating a rechargeable lithium battery according to an embodiment.
FIG. 5 is a scanning electron microscope (SEM) image of a cross-section of the positive electrode active material precursor prepared in Example 1.
FIG. 6 is an SEM image of a cross-section of the positive electrode active material prepared in Example 1.
FIG. 7 is a transmission electron microscope (TEM) image of the primary particles exposed to the surface of the secondary particles in the positive electrode active material of Example 1.
FIG. 8 is a TEM-EELS (transmission electron microscope - electron energy loss spectroscopy) analysis graph for a total of 10 points from point 1 to point 10 shown in FIG. 7.
FIG. 9 is a ToF-SIMS analysis image of the surface of the positive electrode active material of Example 1.
FIG. 10 is a mass spectrum result of the ToF-SIMS analysis of FIG. 9.
FIG. 11 is a graph showing the boron content of the boron coating layer (outside) and the grain boundary boron coating portion (inside) according to the boron input amount measured through ICP emission spectroscopy.
FIG. 12 is a graph showing the initial charge/discharge capacity and 50-cycle capacity retention at high temperature of the coin half-cells of Example 1 and Comparative Examples 1 to 3.
FIG. 13 is a lifespan characteristic graph showing 50-cycle capacity retention at high temperature of the coin half-cells of Example 1 and Comparative Examples 1 to 3;

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "a combination thereof" refers to a mixture, a laminate, a composite, a copolymer, an alloy, a blend, a reaction product, and the like of constituents.

As used herein, "combination thereof" means a mixture, a laminate, a composite, a copolymer, an alloy, blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution as measured by a particle size analyzer.

### Positive Electrode Active Material

In an embodiment, a positive electrode active material for a rechargeable lithium battery includes a lithium nickel-based composite oxide, wherein the positive electrode active material includes a secondary particle in which a plurality of primary particles is aggregated, wherein at least a portion of the primary particles is arranged radially, a boron coating layer disposed on the surface of the secondary particles and containing lithium borate, and a boron-doped layer inside the primary particle exposed to the surface of the secondary particle.

In general, a conventional method of coating boron on a positive electrode active material is conducted by first preparing lithium metal composite oxide and then, mixing it with a boron raw material in a wet or dry manner and heat-treating the mixture. However, the boron has a problem of acting as resistance on the surface of the positive electrode active material and thus rather deteriorates capacity and a cycle-life. On the contrary, an embodiment may provide a secondary particle-type positive electrode active material in which at least a portion of primary particles are radially arranged by adding both a lithium raw material and a boron raw material to a specific positive electrode active material precursor such as nickel-based hydroxide and the like and then, heat-treating the mixture under specific conditions and the like, wherein a boron coating layer and a boron doping layer may be simultaneously formed in the positive electrode active material. When the boron coating layer and the boron doping layer in each appropriate amount are simultaneously formed, the boron may no longer act as resistance but improve structural stability of the positive electrode active material and thus simultaneously improve capacity characteristics and high-temperature cycle-life characteristics of a rechargeable lithium battery.

The boron coating layer is formed on the surface of the secondary particles and may be uniformly coated thereon. The lithium borate of the boron coating layer may be represented as lithium boron oxide or lithium borate, for example, LiBO₂, Li₃B₇O₁₂, Li₆B₄O₉, Li₃B₁₁O₁₈, Li₂B₄O₇, Li₃BO₃, Li₈B₆O₁₃, Li₅B₃O₇, Li₄B₂O₅, Li₁₀B₄O₁₁, Li₈B₂O₇, or a combination thereof.

In the boron coating layer, a content of the lithium borate may be about 0.02 wt% to about 0.5 wt%, for example, about 0.03 wt% to about 0.4 wt%, about 0.04 wt% to about 0.3 wt% or about 0.05 wt% to about 0.2 wt%, and the like based on a total weight of the positive electrode active material. When this content range is satisfied, the boron coating layer may not act as resistance but improve structural stability of the positive electrode active material and thus cycle-life characteristics.

The boron doping layer may be formed inside the secondary particles and specifically, inside the primary particles exposed to the surface of the secondary particles. The primary particles exposed on the surface of the secondary particles may be primary particles in the outermost of the secondary particles. For example, the boron doping layer may be located within a depth range of about 10 nm from the outer surface of the primary particles exposed to the surface of the secondary particles. When the outer surface of the primary particles exposed to the surface of the secondary particles is about 0 nm, the doping layer may be present within a depth range of about 0 nm to about 10 nm from the surface. In other words, the boron doping layer also may be said to be located within the depth range of about 10 nm from the surface of the secondary particles. When the surface of the secondary particles is about 0 nm, the doping layer may be present within a depth range of about 0 nm to about 10 nm from the surface.

The boron doping layer may be located, for example, within a depth range of about 9 nm, within a depth range of about 8 nm, within a depth range of about 7 nm, within a depth range of about 6 nm, within a depth range of about 5 nm, within a depth range of about 4 nm, within a depth range of about 3 nm, or within a depth range of about 2.5 nm from the outer surface of the primary particles exposed to the surface of the secondary particles. This boron doping layer is distinguished from the boron coating layer and also, from a grain boundary boron coating portion described later and contributes to structural stability of the positive electrode active material.

Meanwhile, the positive electrode active material may further include a grain boundary boron coating portion on the surface of the primary particles inside the secondary particles and including lithium borate. Such a grain boundary boron coating portion is present in the inner portion rather than the surface of the secondary particle, and it is coated along the interface of the primary particles in the inner portion of the secondary particle. Here, the inner portion of the secondary particles means the entire interior except for the surface, for example, may mean the entire interior from a depth of approximately 2 µm from the outer surface. It can also be expressed as an inaccessible part of distilled water when washing the secondary particles of the positive electrode active material with distilled water.

According to an embodiment, a weight of the boron coating layer may be greater than a weight of the grain boundary boron coating portion. For example, a weight of the boron coating layer may be at least 4 times a weight of the grain boundary boron coating portion. For example, based on a total amount of the boron coating layer and the grain boundary boron coating portion, the grain boundary boron coating portion may be in a range of about 2 wt% to about 30 wt% and specifically, about 3 wt% to about 25 wt%, or about 5 wt% to about 20 wt%, and in addition, the boron coating layer may be included in a range of about 70 wt% to about 98 wt%, about 75 wt% to about 97 wt%, about 80 wt% to about 95 wt%, or the like. For example, the boron coating layer and the grain boundary boron coating portion may have a weight ratio of about 70:30 to about 98:2, for example, about 75:25 to about 97:3, or about 80:20 to about 95:5. When the boron coating layer and the grain boundary boron coating portion are included within these ratios, the boron may not act as resistance in the positive electrode active material but improve performance, improving both capacity characteristics and cycle-life characteristics of the rechargeable lithium battery at the same time.

A content of the boron coating layer, that is, a content of lithium borate of the boron coating layer based on the total weight of the positive electrode active material may be, for example, about 0.02 wt% to about 0.5 wt%, about 0.03 wt% to about 0.4 wt%, about 0.04 wt% to about 0.3 wt%, about 0.05 wt% to about 0.2 wt%, or the like. A content of the grain boundary boron coating portion, that is, a content of lithium borate of the grain boundary boron coating portion based on the total weight of the positive electrode active material may be, for example, about 0.001 wt% to about 0.05 wt%, about 0.001 wt% to about 0.04 wt%, about 0.002 wt% to about 0.03 wt%, or about 0.003 wt% to about 0.02 wt%, but is not limited thereto. When the contents of the boron coating layer and the grain boundary boron coating portion based on the total weight of the positive electrode active material are within the ranges, both the capacity characteristics and the cycle-life characteristics of the rechargeable lithium battery may be improved.

A total amount of the boron coating layer and the grain boundary boron coating portion based on the total amount of the positive electrode active material may be 0.1 mol% to 5 mol%, for example, about 0.1 mol% to about 3 mol%, about 0.1 mol% to about 2.5 mol%, about 0.1 mol% to about 2 mol%, about 0.1 mol% to about 1.5 mol%, or about 0.5 mol% to about 1.3 mol%. When the total amount of the boron coating layer and the grain boundary boron coating portion is out of the predetermined content, initial discharge capacity may be reduced, and cycle-life characteristics may be deteriorated. Particularly, when the content of the boron coating layer on the surface of the secondary particles becomes excessive, boron may work as resistance and thus greatly reduce initial discharge capacity of the rechargeable lithium battery.

On the other hand, the positive electrode active material includes secondary particles in which at least two or more primary particles are aggregated, and at least a portion of the primary particles have a radially arranged structure. At least some of the primary particles may have a plate shape. The plate-shaped primary particles may have a thickness smaller than a long axis length. Here, the long axis length means the maximum length with respect to the widest surface of the primary particle. That is, the primary particle may have a structure in which the length (t) in one axial direction (i.e., thickness direction) is smaller than the long axis length (a) in the other direction (i.e., plane direction).

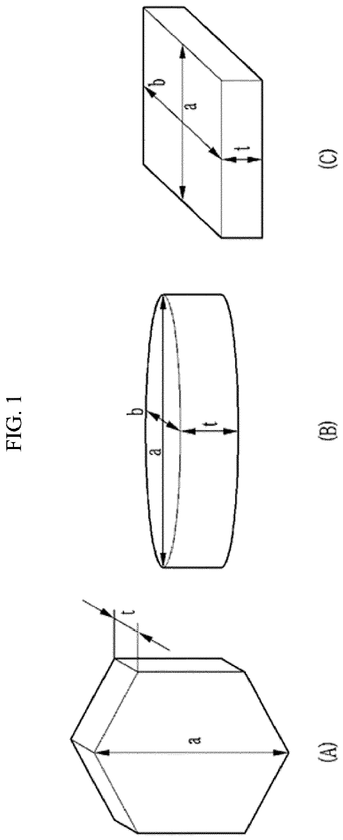

FIG. 1 is a schematic view showing the plate shape of primary particles of a first positive electrode active material. Referring to FIG. 1, the primary particles according to an embodiment have various detailed shapes while having a basic plate structure, for example, (A) a polygonal nanoplate shape such as a hexagon, (B) a nanodisk shape, and (C) a rectangular parallelepiped shape. In FIG. 1, "a" means the length of the long axis of the primary particle, "b" means the length of the short axis of the primary particle, and "t" means the thickness of the primary particle. The thickness t of the primary particles may be smaller than the lengths a and b in the plane direction. Among the lengths in the plane direction, a may be longer or equal to b. A direction in which the thickness t is defined in the primary particles is defined as a thickness direction, and a direction having lengths a and b is defined as a plane direction.

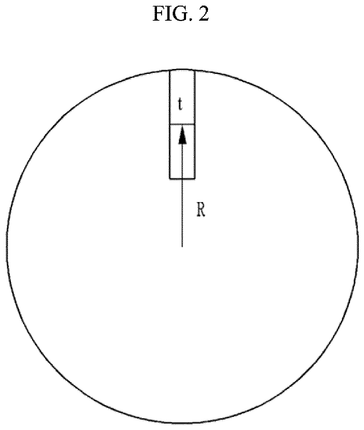

In the positive electrode active material, at least a portion of the primary particles has a radially arranged structure, and for example, long axes of the primary particles may be arranged in a radial direction. FIG. 2 is a view for explaining the definition of a radial arrangement in secondary particles according to an embodiment. In an embodiment, the radially arranged structure means that, as shown in FIG. 2, the thickness (t) direction of the primary particles is perpendicular to or within an angle of about ±5° of perpendicular to the direction (R) from the center of the secondary particle to the surface.

An average length of the primary particles of the secondary particle may be about 0.01 µm to about 5 µm, for example about 0.01 µm to about 2 µm, about 0.01 µm to about 1 µm, about 0.02 µm to about 1 µm, about 0.05 µm to about 0.5 µm, or about 150 nm to about 500 nm. Here, "average length" means the average length of the long axis length (a) in the plane direction when the primary particles are plate-shaped, and when the primary particle is spherical, it means the average particle diameter.

When the primary particles are plate-shaped, an average thickness of the primary particles may be, for example, greater than or equal to about 50 nm, greater than or equal to about 100 nm, greater than or equal to about 200 nm, greater than or equal to about 300 nm, greater than or equal to about 400 nm, greater than or equal to about 500 nm, greater than or equal to about 600 nm, greater than or equal to about 700 nm, greater than or equal to about 800 nm, or greater than or equal to about 900 nm, and for example less than or equal to about 5 µm, less than or equal to about 4 µm, less than or equal to about 3 µm, less than or equal to about 2 µm, less than or equal to about 1 µm, less than or equal to about 900 nm, less than or equal to about 800 nm, less than or equal to about 700 nm, less than or equal to about 600 nm, or less than or equal to about 500 nm, for example about 100 nm to about 200 nm. In addition, in the primary particle, a ratio of the average thickness to the average length may be about 1:1 to about 1:10, for example, about 1:1 to about 1:8, about 1:1 to about 1:6, or about 1:2 to about 1:5.

For example, an average long axis length of the plate-shaped primary particles may be 150 nm to 500 nm, an average thickness is about 100 nm to about 200 nm, and a ratio of the average thickness to the average long axis length is about 1:2 to about 1:5. The average long axis length, the average thickness, and their ratio may be obtained by randomly selecting about 20 primary particles from an electron microscope image of a fracture surface of secondary particles, measuring the long axis length and thickness, calculating their ratio, and calculating each arithmetic mean.As described above, when the average length, the average thickness, and the ratio between the average thickness and the average length of the primary particles satisfy the above ranges and at least a portion of the primary particles are radially arranged, it is possible to have relatively many lithium diffusion pathways between grain boundaries on the surface side, and a large number of crystal planes capable of lithium transfer are exposed to the outside, so that lithium diffusion is improved and high initial efficiency and capacity can be secured. In addition, when the primary particles are arranged radially, the pores exposed on the surface are directed toward the center of the secondary particles, thereby promoting diffusion of lithium. Due to the radially arranged primary particles, uniform contraction and expansion are possible when lithium is deintercalated and/or intercalated, and when lithium is deintercalated, pores exist in the (001) direction, which is the direction in which the particles expand, so that they act as a buffer. In addition, due to the size and arrangement of the primary particles, the probability of cracks occurring during contraction and expansion of the active material may be lowered, and the inner pores further alleviate the volume change to reduce the cracks generated between the primary particles during charging and discharging, resulting in improved cycle-life characteristics of a rechargeable lithium battery and reduced resistance increase phenomenon.

The positive electrode active material may have an irregular porous structure in at least one of the inner portion and the outer portion of the secondary particle. The term "irregular porous structure" may refer to a structure in which the pore sizes and shapes are not regular and do not have uniformity. For example, the secondary particle may include an inner portion including an irregular porous structure and an outer portion having a radially arranged structure. That is, the primary particles in the inner portion may be arranged without regularity, unlike the primary particles in the outer portion. The inner portion containing the irregular porous structure includes primary particles like the outer portion.

A ratio of a radius of the inner portion to a radius of the secondary particle (a distance from the center to the surface of the particle) may be about 40 length% to about 60 length%, and such an area may be defined as an inner portion. The outer portion may refer to an area from the outermost surface to about 40 length% to about 60 length% of a radius of the secondary particle. In addition, a ratio of a volume of the outer portion to a volume of the secondary particle may be less than or equal to about 90 volume%, less than or equal to about 87 volume%, or less than or equal to about 85% volume%.

The secondary particle of the positive electrode active material may include a radially-arranged outer portion and an inner portion having an irregular porous structure, wherein the inner portion of the secondary particle may have a larger pore than the outer portion. For example, in the positive electrode active material, the inner portion may have a pore size of about 150 nm to about 1 µm and an outer portion may have a pore size of less than about 150 nm. In this way, when the pore size of the inner portion is larger than that of the outer portion, there may be an advantage of shortening a diffusion distance of lithium in the active material, compared with a secondary particle having the same pore sizes of the inner and outer portions, and lithium may be easily inserted from the outside, and in addition, there may be an effect of alleviating the volume changes during the charge and discharge. Herein, the pore size means an average diameter when a pore is spherical or circular and a length of a long axis when the pore is oval. The pore size may be obtained by randomly selecting about 20 pores from an electron microscope image of a fracture surface of the secondary particle, measuring a long axis length of the pores, and calculating their arithmetic mean.

The secondary particle of the positive electrode active material may have open pores on the surface and facing toward the center of the inner portion and a size of the open pore may be less than about 150 nm, for example, about 10 nm to about 148 nm. The open pore is an exposed pore through which a material can enter and exit. The open pores may be formed to a depth of less than or equal to about 150 nm, for example, about 0.001 nm to about 100 nm, for example, about 1 nm to about 50 nm on average from the surface of the secondary particle. The size and depth of the open pore may be measured by the BJH (Barrett, Joyner and Halenda) method, which is a method of deriving from an amount of adsorbed or desorbed nitrogen.

Closed pores may exist in the inner portion of the secondary particle, and closed pores and/or open pores may exist in the outer portion. The closed pores may exclude or mostly exclude an electrolyte, while the open pores may include an electrolyte therein. The closed pores are independent pores that are not connected to other pores because all of the walls of the pores are formed in a closed structure, and the open pores are continuous pores connected to the outside of the particle because at least some of the walls of the pores are formed in an open structure.

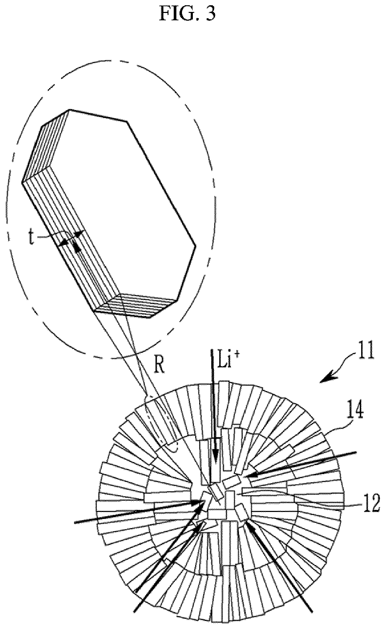

FIG. 3 is a schematic view illustrating a cross-sectional structure of secondary particles of the positive electrode active material. Referring to FIG. 3, the secondary particles 11 of the positive electrode active material according to an embodiment have an outer portion 14 having a structure in which the primary particles having a plate shape are arranged in a radial direction, and an inner portion 12 in which the primary articles 13 are irregularly arranged. The inner portion 12 may have more empty spaces between the primary particles than the outer portion. In addition, the pore size and porosity in the inner portion are large and irregular compared with the pore size and porosity in the outer portion. In FIG. 3, arrows indicate the movement direction of lithium ions.

In the secondary particle, the inner portion has a porous structure, so that the diffusion distance of lithium ions to the inner portion is reduced, and the outer portion has radial structure, so that lithium ions are easily intercalated into the surface. In addition, since the size of the primary particles is small, it is easy to secure a lithium transfer path between crystal grains. In addition, since the size of the primary particles is small and the pores between the primary particles alleviate the volume change occurring during charging and discharging, the stress caused by the volume change during charging and discharging may be minimized. Such a positive electrode active material may reduce resistance of a rechargeable lithium battery and improve capacity characteristics and cycle-life characteristics.

On the other hand, in the secondary particles, the plurality of primary particles may have a radial arrangement structure by being arranged toward the "single (1)" center to make surface contact along the thickness direction of the primary particles or alternatively, the secondary particles may have a "multi-center" radial arrangement structure having a plurality of centers. As such, when the secondary particles have a single-center or multi-center radial arrangement structure, lithium is easily deintercalated and/or intercalated to the center of the secondary particles.

The secondary particles may include radial primary particles and non-radial primary particles. A content of the non-radial primary particles may be less than or equal to about 30 wt%, for example about 0.01 wt% to about 30 wt%, specifically about 0.1 wt% to about 20 wt%, based on the total weight of the radial primary particles and the non-radial primary particles.

The positive electrode active material includes a lithium nickel-based composite oxide. The nickel content in the lithium nickel-based composite oxide may be greater than or equal to about 30 mol%, for example greater than or equal to about 40 mol%, greater than or equal to about 50 mol%, greater than or equal to about 60 mol%, greater than or equal to about 70 mol%, greater than or equal to about 80 mol%, or greater than or equal to about 90 mol% and less than or equal to about 99.9 mol%, or less than or equal to about 99 mol% based on the total amount of metals other than lithium. For example, the nickel content in the lithium nickel-based composite oxide may be higher than the content of each of other metals such as cobalt, manganese, and aluminium. When the nickel content satisfies the above range, the positive electrode active material may exhibit excellent battery performance while realizing a high capacity.

The lithium nickel-based composite oxide may be represented by Chemical Formula 1.

[Chemical Formula 1] Liₐ₁Niₓ₁M¹_{y1}M²_{1-x1-y1}O_{2-z}X_{z}

In Chemical Formula 1, 0.9≤a1≤1.8, 0.3≤x1≤1, 0≤y1≤0.7, and 0≤z≤0.1, M¹ and M² are each independently Al, B, Ba, Ca, Ce, Co, Cr, Cu, Fe, Mg, Mn, Mo, Nb, Si, Sr, Ti, V, W, Zr, or a combination thereof, and X is F, P, S, or a combination thereof.

In Chemical Formula 1, for example, 0.4≤x1≤1 and 0≤y1≤0.6, 0.5≤x1≤1 and 0≤y1≤0.5, 0.6≤x1≤1 and 0≤y1≤0.4, or 0.7≤x1≤1 and 0≤y1≤0.3, 0.8≤x1≤1 and 0≤y1≤0.2, or 0.9≤x1≤1 and 0≤y1≤0.1.

The lithium nickel-based composite oxide may be, for example, represented by Chemical Formula 2.

[Chemical Formula 2] Liₐ₂Niₓ₂Co_{y2}M³_{1-x2-y2}O_{2-z}X_{z}

In Chemical Formula 2, 0.9≤a2≤1.8, 0.3≤x2<1, 0<y2≤0.7, and 0≤z≤0.1, M³ is Al, B, Ba, Ca, Ce, Cr, Cu, Fe, Mg, Mn, Mo, Nb, Si, Sr, Ti, V, W, Zr, or a combination thereof, and X is F, P, S, or a combination thereof.

In Chemical Formula 2, for example, 0.3≤x2≤0.99 and 0.01≤y2≤0.7, 0A≤x2≤0.99 and 0.01≤y2≤0.6, 0.5≤x2≤0.99 and 0.01≤y2≤0.5, or 0.6≤x2≤0.99 and 0.01≤y2≤0.4, 0.7≤x2≤0.99 and 0.01≤y2≤0.3, 0.8≤x2≤0.99 and 0.01≤y2≤0.2, or 0.9≤x2≤0.99 and 0.01≤y2≤0.1.

The lithium nickel-based composite oxide may be, for example, represented by Chemical Formula 3.

[Chemical Formula 3] Liₐ₃Niₓ₃Co_{y3}M⁴_{z3}M⁵_{1-x3-y3-z3}O_{2-z}X_{z}

In Chemical Formula 3, 0.9≤a3≤1.8, 0.3≤x3≤0.98, 0.01≤y3≤0.69, 0.01≤z3≤0.69, 0≤z≤0.1, M⁴ is Al, Mn, or a combination thereof, M⁵ is B, Ba, Ca, Ce, Cr, Cu, Fe, Mg, Mo, Nb, Si, Sr, Ti, V, W, Zr, or a combination thereof, and X is F, P, S, or a combination thereof.

In Chemical Formula 3, for example, 0.4≤x3≤0.98, 0.01≤y3≤0.59, and 0.01≤z3≤0.59, 0.5≤x3≤0.98, 0.01≤y3≤0.49, and 0.01≤z3≤0.49, or 0.6≤x3≤0.98, 0.01≤y3≤0.39, and 0.01≤z3≤0.39, or 0.7≤x3≤0.98, 0.01≤y3≤0.29, and 0.01≤z3≤0.29, or 0.8≤x3≤0.98, 0.01≤y3≤0.19, and 0.01≤z3≤0.19, or 0.9≤x3≤0.98, 0.01≤y3≤0.09, and 0.01≤z3≤0.09.

Generally, as the nickel content in the positive electrode active material is increased, since cation mixing, in which Ni²⁺ ions take lithium sites, also increases, capacity rather decreases, or since diffusion of lithium ions is hindered by impurities such as NiO and the like, a battery cycle-life may be deteriorated, and in addition, the positive electrode active material has a side reaction with an electrolyte due to the structural collapse and cracks according to charges and discharges, which may decrease the battery cycle-life and bring about a safety problem. In order to solve these problems, when boron is coated only on the surface of an active material in a conventional method, the boron acts as resistance and rather decreases capacity and deteriorates a cycle-life. On the contrary, the positive electrode active material according to an embodiment, even if a high nickel-based material is used, includes the boron coating layer and the boron doping layer appropriately and accordingly, may improve problems due to the high concentration of nickel and thus realize high capacity and simultaneously, may improve cycle-life characteristics without deteriorating initial discharge capacity.

### Method of Preparing Positive Electrode Active Material

In an embodiment, a method of preparing a positive electrode active material for a rechargeable lithium battery includes mixing a nickel-based hydroxide, a lithium raw material, and a boron raw material and heat-treating the resultant.

Conventionally, when boron is coated on a positive electrode active material, a lithium raw material is commonly mixed with a nickel-based hydroxide followed by heat-treating the resultant to prepare a lithium nickel-based composite oxide, and a boron source is mixed therewith by a wet or dry method followed by performing heat-treatment again. In this case, only the surface of the positive electrode active material is coated with boron, and thus boron acts as a resistance, thereby reducing capacity and cycle-life. On the other hand, according to the preparing method according to an embodiment, a secondary particle in which at least a portion of the primary particles are radially arranged is produced, and at the same time, a boron coating layer and a boron doping layer are appropriately formed, so that boron does not act as a resistance to obtain a positive electrode active material that is structurally stable and has excellent cycle-life characteristics.

In the preparing method, the nickel-based hydroxide is a precursor of the positive electrode active material, and may be expressed as a nickel metal composite hydroxide or a nickel transition metal composite hydroxide, and may be prepared by a co-precipitation method or the like.

The nickel-based hydroxide may be, for example, represented by Chemical Formula 11.

[Chemical Formula 11] Niₓ₁₁M¹¹_{y11}M¹²_{1-x11-y11}(OH)₂

In Chemical Formula 11, 0.3≤x11≤1, 0≤y11≤0.7, and M¹¹ and M¹² are each independently Al, B, Ba, Ca, Ce, Co, Cr, Cu, F, Fe, Mg, Mn, Mo, Nb, P, S, Si, Sr, Ti, V, W, Zr, or a combination thereof.

As a specific example, the nickel-based hydroxide may be represented by Chemical Formula 12 or Chemical Formula 13.

[Chemical Formula 12] Niₓ₁₂Co_{y12}M¹³_{1-x12-y12}(OH)₂

In Chemical Formula 12, 0.3≤x12<1, 0<y12≤0.7 M¹³ is Al, B, Ba, Ca, Ce, Cr, Cu, F, Fe Mg, Mn, Mo, Nb, P, S, Si, Sr, Ti, V, W, Zr, or a combination thereof.

[Chemical Formula 13] Niₓ₁₃Co_{y13}M¹⁴_{z13}M¹⁵_{1-x13-y13-z13}(OH)₂

In Chemical Formula 13, 0.3≤x13≤0.98, 0.01≤y13≤0.69, 0.01≤z13≤0.69, M¹⁴ is Al, Mn, or a combination thereof, and M¹⁵ is B, Ba, Ca, Ce, Cr, Cu, F, Fe, Mg, Mo, Nb, P, S, Si, Sr, Ti, V, W, Zr, or a combination thereof.

The lithium raw material may be, for example, lithium hydroxide and the like, and may be mixed in a ratio of about 0.8 mole to about 1.8 mole, or about 0.9 mole to about 1.2 mole based on 1 mole of the nickel-based hydroxide.

The boron raw material may be a compound containing boron, for example, H₃BO₃, HBO₂, B₂O₃, C₆H₅B(OH)₂, (C₆H₅O)₃B, [CH₃(CH₂)₃O]₃B, (C₃H₇O)₃B, C₃H₉B₃O₆, C₁₃H₁₉BO₃, or a combination thereof.

A content of the boron raw material may be about 0.1 parts by mole to about 5 parts by mole, for example about 0.1 parts by mole to about 4 parts by mole, about 0.1 parts by mole to about 3 parts by mole, about 0.1 parts by mole to about 2.9 parts by mole, about 0.1 parts by mole to about 2.5 parts by mole, about 0.1 parts by mole to about 2 parts by mole, about 0.1 parts by mole to about 1.5 parts by mole, or about 0.5 parts by mole to about 1.3 parts by mole based on 100 parts by mole of the nickel-based hydroxide. When the content of boron raw material satisfies the above range, boron does not act as a resistance in the positive electrode active material and may serve to improve performance of a rechargeable lithium battery, thereby improving capacity and improving cycle-life characteristics. When the content of the boron raw material is excessive, the content of the boron coating layer is excessively increased, and boron acts as a resistance in the positive electrode active material, thereby reducing the capacity and cycle-life of the battery.

The heat-treating may be performed at a temperature of about 650 °C to about 850 °C, or about 690 °C to about 780 °C. In this case, a positive electrode active material for a rechargeable lithium battery having a stable structure while including both the boron coating layer and boron doping layer may be prepared.

In addition, the heat-treating may be performed for about 5 hours to about to 25 hours, for example, about 8 hours to about 12 hours. In this case, a positive electrode active material for a rechargeable lithium battery having a stable structure including both the boron coating layer and boron doping layer is prepared.

### Rechargeable Lithium Battery

Another embodiment provides a rechargeable lithium battery including a positive electrode, a negative electrode, a separator between the positive electrode and the negative electrode, and an electrolyte.

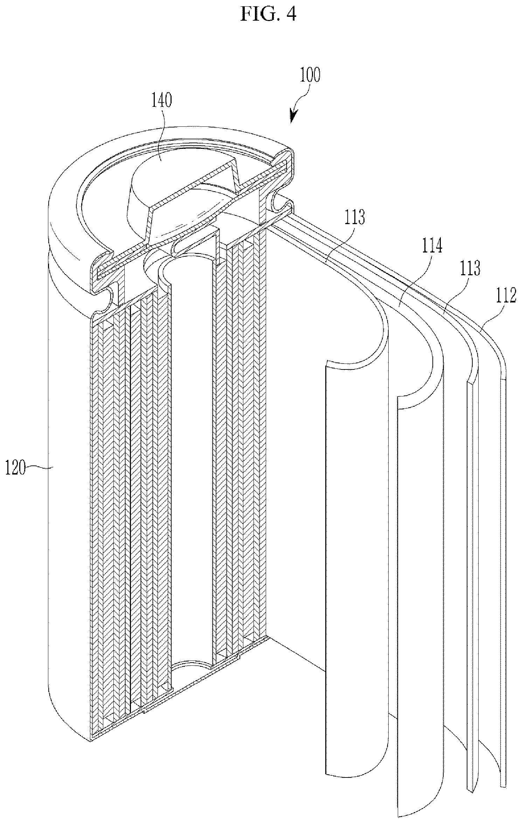

FIG. 4 is a schematic view illustrating a rechargeable lithium battery according to an embodiment. Referring to FIG. 4, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

### Positive Electrode

The positive electrode for a rechargeable lithium battery according to an embodiment may include a current collector and a positive electrode active material layer on the current collector. The positive electrode active material layer may include a positive electrode active material, and may further include a binder and/or a conductive material.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

A content of the binder in the positive electrode active material layer may be about 1 wt% to about 5 wt% based on the total weight of the positive electrode active material layer.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminium, silver, and the like; a conductive polymer such as a polyphenylene derivative; or a mixture thereof.

A content of the conductive material in the positive electrode active material layer may be about 1 wt% to about 5 wt% based on the total weight of the positive electrode active material layer.

An aluminium foil may be used as the current collector, but is not limited thereto.

### Negative Electrode

The negative electrode for a rechargeable lithium battery may include, for example, a current collector and a negative electrode active material layer on the current collector. The negative electrode active material layer may include a negative electrode active material, and may further include a binder and/or a conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be about 99:1 to about 33:67. The silicon particles may be SiOₓ particles, and in this case, the range of x in SiOₓ may be greater than about 0 and less than about 2. As used herein, when a definition is not otherwise provided, an average particle diameter (D50) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

In the negative electrode active material layer, the negative electrode active material may be included in an amount of about 95 wt% to about 99 wt% based on the total weight of the negative electrode active material layer.

In an embodiment, the negative electrode active material layer may further include a binder, and may optionally further include a conductive material. The content of the binder in the negative electrode active material layer may be about 1 wt% to about 5 wt% based on the total weight of the negative electrode active material layer. In addition, when the conductive material is further included, the negative electrode active material layer may include about 90 wt% to about 98 wt% of the negative electrode active material, about 1 wt% to about 5 wt% of the binder, and about 1 wt% to about 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. As the alkali metal, Na, K or Li may be used. The amount of such a thickener used may be about 0.1 parts by weight to about 3 parts by weight based on 100 parts by weight of the negative electrode active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

### Electrolyte

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. The carbonate-based solvent may be dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may be methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

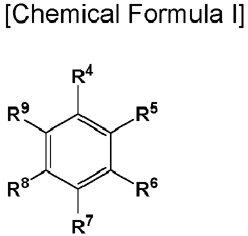

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylene carbonate or an ethylene carbonate-based compound of Chemical Formula II in order to improve cycle-life of a battery.

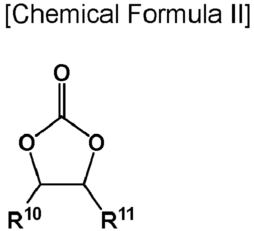

In Chemical Formula II, R¹⁰ and R¹¹ are the same or different, and are selected from hydrogen, a halogen, a cyano group, a nitro group, and fluorinated C1 to C5 alkyl group, provided that at least one of R¹⁰ and R¹¹ is selected from a halogen, a cyano group, a nitro group, and fluorinated C1 to C5 alkyl group, but both of R¹⁰ and R¹¹ are not hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), (wherein x and y are natural numbers, for example, an integer ranging from 1 to 20), lithium difluoro(bisoxolato) phosphate, LiCI, Lil, LiB(C₂O₄)₂ (lithium bis(oxalato) borate; LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

### Separator

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, separator may be selected from a glass fiber, polyester, polyethylene, polypropylene, polytetrafluoroethylene, or a combination thereof. It may have a form of a non-woven fabric or a woven fabric. For example, in a lithium ion battery, a polyolefin-based polymer separator such as polyethylene and polypropylene may be mainly used. In order to ensure the heat resistance or mechanical strength, a coated separator including a ceramic component or a polymer material may be used. Optionally, it may have a mono-layered or multilayered structure.

Rechargeable lithium batteries may be classified into lithium ion batteries, lithium ion polymer batteries, and lithium polymer batteries according to a type of separator and a type of electrolyte used in the batteries, into cylindrical type, prismatic type, coin-type, pouch-type, and the like according to a shape, and into a bulk type and a thin film type according to a size. Since structures of these batteries and manufacturing methods thereof are well known in the art, detailed descriptions thereof will be omitted.

The rechargeable lithium battery according to an embodiment may be used in an electric vehicle (EV), or a hybrid vehicle such as a plug-in hybrid electric vehicle (PHEV) and the like due to a high capacity, improved storage stability at a high temperature and cycle-life characteristics, and high rate capability.

Hereinafter, examples of the present invention and comparative examples are described. It is to be understood, however, that the examples are for the purpose of illustration and are not to be construed as limiting the present invention.

### Example 1

### 1. Preparation of Positive Electrode Active Material Precursor

A positive electrode active material precursor is prepared through the following co-precipitation method. Nickel sulfate, cobalt sulfate, and aluminium nitrate were used as metal raw materials. In addition, ammonia water (NH₄OH) and sodium hydroxide (NaOH) as a precipitating agent were prepared to form a complex.

### [First step: 1.5 kW/m³, NH₄OH 0.35 M, pH 11.5 to 11.7, and reaction time of 6 hours]

First, ammonia water having a concentration of 0.35 M is put in a reactor. While metal raw materials and a complex agent are added thereto respectively at 85 ml/min and 9 ml/min at 50 °C under a stirring power of 1.5 kW/m³, a reaction is started. While NaOH is added thereto to maintain pH, the reaction was performed for 6 hours. As a result of the reaction, it was confirmed that the average size of the obtained core particles was in the range of about 6.5 µm to 7.5 µm, and the second step was performed as follows.

### [Second step: 1.0 kW/m³, NH₄OH 0.40 M, pH 11.5 to 11.7, and reaction time of 16 hours]

The metal raw materials and the complex agent were added thereto respectively at 107 ml/min and 13 ml/min, while the reaction temperature was maintained at 50 °C, so that the complex agent maintained a concentration of 0.40 M. While adding NaOH thereto in order to maintain pH, the reaction was performed for 16 hours. At this time, the stirring power was lowered to 1.0 kW/m³, which was lower than the first step, and the reaction proceeds. By carrying out this reaction, it was confirmed that the average size of the product particles containing the core and the intermediate layer was 10.5 µm to 11.5 µm, and the third step was performed as follows.

### [Third step: 0.5 kW/m³, NH₄OH 0.40 M, pH 11.5 to 11.7, and reaction time of 5 hours]

While maintaining the reaction temperature of 50 °C, the metal raw materials and the complex agent were added at the rates of 142 ml/min and 17 ml/min, respectively, so that the concentration of the complex agent was maintained the same as in the second step. While adding NaOH to maintain the pH, the reaction was carried out for 5 hours so that the average particle size reached 14 µm. At this time, the stirring power was lowered to 0.5 kW/m³, which was lower than in the second step, and the reaction proceeds.

### [Post-process]

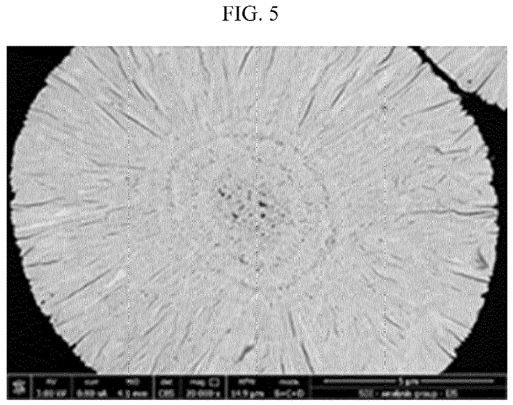

After washing the resultant, the washed resultant was dried with hot air at about 150 °C for 24 hours to obtain nickel-based hydroxide (Ni_{0.945}Co_{0.04}Al_{0.015}(OH)₂), which was a precursor of the positive electrode active material. FIG. 5 is a SEM image of a cross section of the positive electrode active material precursor prepared in Example 1.

### 2. Preparation of Positive electrode active material

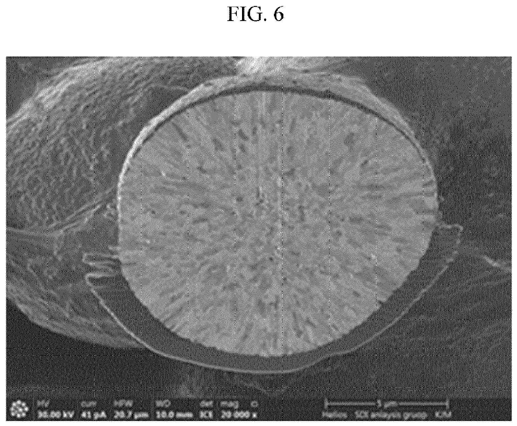

The obtained nickel-based hydroxide and LiOH were mixed in a mole ratio of 1:1, and 1.0 part by mole of boric acid based on 100 parts per mole of the nickel-based hydroxide was added thereto and then, heat-treated 725 °C under an oxygen atmosphere for 10 hours, obtaining a positive electrode active material. FIG. 6 is an SEM image of a cross-section of the positive electrode active material prepared in Example 1. Referring to FIG. 6, the positive electrode active material had a structure of secondary particles in which a plurality of primary particles were aggregated, wherein the structure had a porous center inside, and the primary particles were radially arranged outside thereof.

### 3. Manufacture of Positive Electrode

96 wt% of the obtained positive electrode active material, 2 wt% of polyvinylidene fluoride, 2 wt% of carbon nanotube, and N-methylpyrrolidone as a solvent were mixed in a mixer to prepare slurry for a positive electrode active material layer. The slurry for a positive electrode active material layer was coated on an aluminium foil into an electrode plate and then, dried at 135 °C for at least 3 hours, roll-pressed, and vacuum-dried, manufacturing a positive electrode.

### 4. Manufacture of Coin Half-Cell

The positive electrode and a lithium metal counter electrode were used to manufacture a coin half-cell. Between the positive electrode and the lithium metal counter electrode, a separator formed of a porous polyethylene film (thickness: about 16µm) was interposed, and an electrolyte solution was injected thereinto. The electrolyte solution was prepared by mixing ethylene carbonate (EC) and ethylmethyl carbonate (EMC) in a volume ratio of 3:5 and dissolving 1.1 M LiPF₆ in the mixed solvent.

### Comparative Example 1

A positive electrode and a coin half-cell were manufactured in the same manner as in Example 1 except that LiNi_{0.945}Co_{0.04}Al_{0.015}O₂ composed of general secondary particles and having a particle diameter of about 14µm were used as a positive electrode active material of Comparative Example 1.

### Comparative Example 2

A positive electrode active material coated with a boron compound was prepared in a conventional method by mixing the positive electrode active material (LiNi_{0.945}Co_{0.04}Al_{0.015}O₂) of Comparative Example 1 with 1.0 mol% of boric acid and then, heat-treating the mixture at 350 °C for 8 hours under an oxygen atmosphere. Subsequently, a positive electrode and a coin half-cell were manufactured in the same manner as in Example 1 except that this positive electrode active material of Comparative Example 2 was used.

### Comparative Example 3

The positive electrode active material (LiNi_{0.945}Co_{0.04}Al_{0.015}O₂) of Comparative Example 1 was heat-treated at 350 °C for 8 hours under an oxygen atmosphere without adding the boric acid. Subsequently, a positive electrode and a coin half-cell were manufactured in the same manner as in Example 1 except that this positive electrode active material of Comparative Example 3 was used.

### Evaluation Example 1: Confirmation of Boron Doping Layer through TEM-EELS Analysis

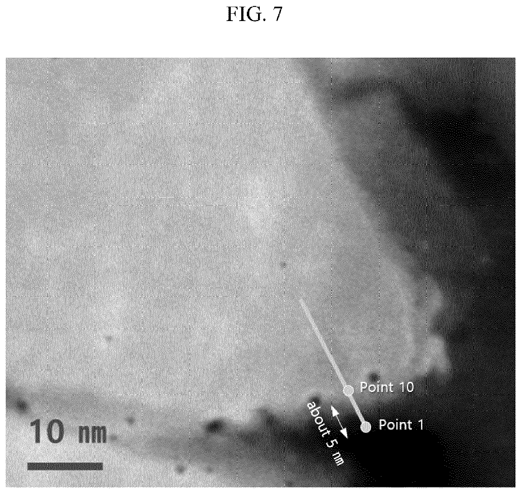

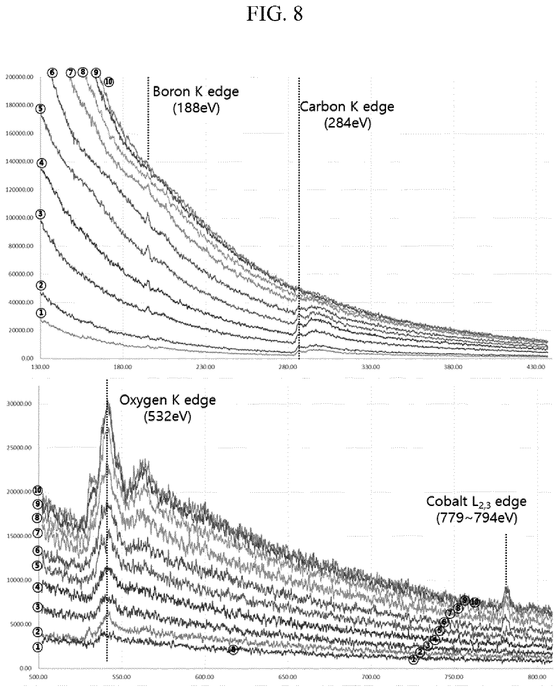

FIG. 7 is a TEM image of the primary particles, that is, primary particles in the outermost portion of the secondary particles exposed to the surface of the secondary particles in the positive electrode active material of Example 1. Electron energy loss spectroscopy (EELS) was performed on a total of 10 points from point 1 to point 10 shown in FIG. 7, and the results are shown in FIG. 8. In FIG. 8, for example, ① means an analysis graph at the point 1. Referring to a bottom graph of FIG. 8, cobalt was detected from point 4 and up, that is, from point 4 to point 10. Accordingly, the surface of the active material started approximately from the point 4. Referring to a top graph of FIG. 8, boron was detected from point 3 to point 8. Herein, the boron detected from the point 3 could be said to be a boron coating layer present on the surface of the active material, but the boron from point 4 to point 8 could be said to be present inside the active material and a very thin boron doping layer.

### Evaluation Example 2: Confirmation of Coating Layer

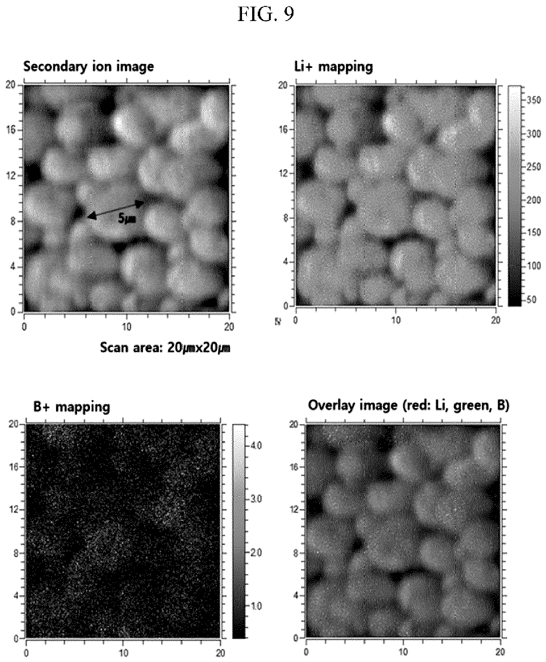

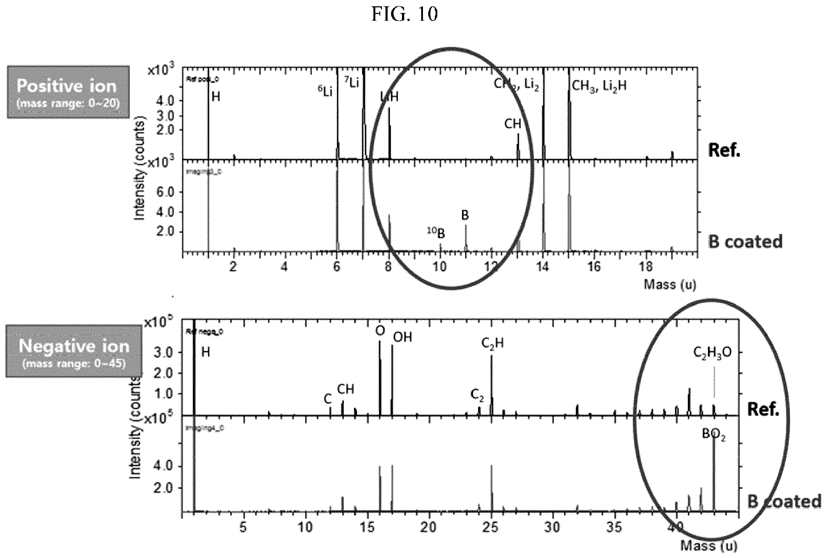

FIG. 9 is a ToF-SIMS (Time-of-Flight Secondary Ion Mass Spectrometry) analysis image of the surface of the positive electrode active material of Example 1, and FIG. 10 is a mass spectrum result of the ToF-SIMS analysis of FIG. 9. In FIG. 9, boron elements were evenly distributed on the surface of the positive electrode active material, and in FIG. 10, lots of BO₂ were found. Accordingly, a lithium boron compound was uniformly coated on the surface of the positive electrode active material according to Example 1, wherein lithium borate such as LiBO₂ and the like were found as a main component.

### Evaluation Example 3: Evaluation of Boron Content of Boron Coating Layer and Grain Boundary Boron Coating Portion

ICP (inductively coupled plasma) emission spectroscopic analysis is performed on the positive electrode active material prepared in Example 1 to measure the content of boron. Then, 10 g of each positive electrode active material is added to 100 g of distilled water and then, stirred for 30 minutes and filtered with a filter to obtain the positive electrode active material. Through this washing process, boron on the surface of the positive electrode active material is all removed. The recovered positive electrode active material is dried at 130 °C for 24 hours and then a content of boron remaining in the positive electrode active material is measured through an ICP emission spectroscopic analysis again. This boron content is expressed as a boron content of 'inner portion.'

This means the content of the grain boundary boron coating portion. In addition, a difference obtained by subtracting the boron content after the washing from the boron content before the washing, that is, a boron content removed through the washing is expressed as a boron content of 'outer portion.'

This means the content of the boron coating layer.

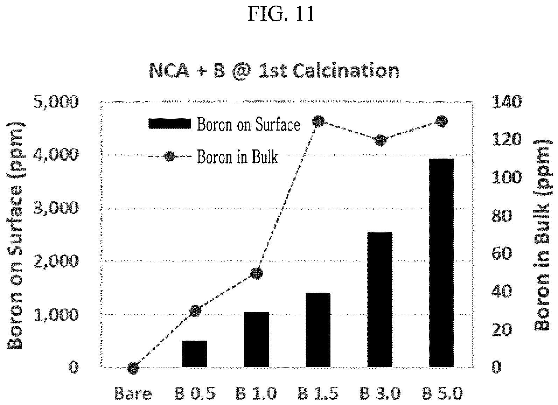

Positive electrode active materials were prepared in the same method as in Example 1 except for changing the content of boric acid (1.0 part by mole in Example 1) into 0 part by mole, 0.5 parts by mole, 1.5 parts by mole, 3.0 parts by mole, and 5.0 parts by mole and then, analyzed with respect to inner and outer boron contents in the same method as the above, and the results are shown in FIG. 11. In FIG. 11, unit ppm means 10⁻⁴ wt%, which may mean a weight ratio of boron to a total weight of each positive electrode active material.

Referring to FIG. 11, in Example 1 of which a boron input amount was 1.0 part by mole, a boron content of a boron coating layer was about 1000 ppm, that is, 0.1 wt% based on a total amount of the positive electrode active material, and a boron content of a grain boundary boron coating portion was about 50 ppm, that is, 0.005 wt% based on the total amount of the positive electrode active material. Herein, an outer: inner boron weight ratio was calculated into about 95:5. In addition, in FIG. 11, when the boron input amount was 1.5 parts by mole, the outer : inner boron weight ratio was calculated into about 92:8. Referring to FIG. 11, a boron compound such as lithium borate and the like was coated not only on the surface of the positive electrode active material secondary particles but also on the inner grain boundaries, wherein the boron content on the surface was 4 times or more than that of the inner grain boundaries.

### Evaluation Example 4: Evaluation of Capacity and High-temperature Cycle-life Characteristics

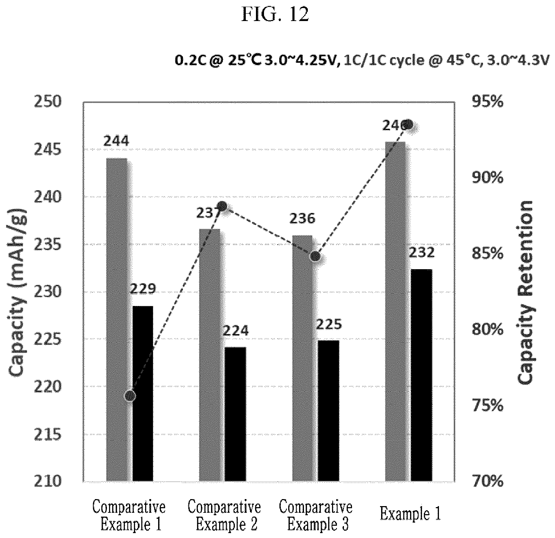

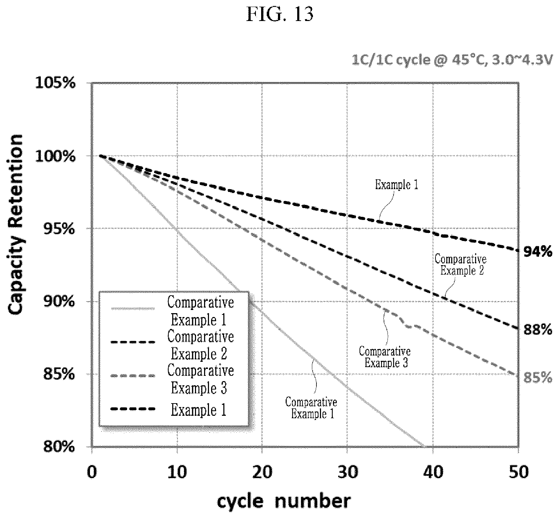

The coin half-cells according to the examples and the comparative examples were charged to an upper limit voltage of 4.25 V at a constant current of 0.2 C and discharged to a discharge cut-off voltage of 3.0 V at 0.2 C at 25 °C and then, measured with respect to initial charge and discharge capacity, and the results are shown in FIG. 12. In FIG. 12, a gray bar graph represents initial charge capacity, and a black bar graph represents initial discharge capacity. After the initial charge and discharge, the coin half-cells were 50 times or more repetitively charged at 1 C within a voltage range of 3.0 V to 4.3 V and discharged at 1 C at 45 °C and then, evaluated with respect to high-temperature cycle-life characteristics, and the results are shown in FIG. 13. A dotted line graph of FIG. 12 represents capacity retention at the 50^{th} cycle.

Referring to FIGS. 12 and 13, compared with Comparative Example 1 using a general secondary particle type positive electrode active material, Comparative Example 2 using a positive electrode active material coated with boron in a conventional method, and Comparative Example 3 using a positive electrode active material additionally heat-treated without boron coating, Example 1 exhibited high initial charge capacity and high initial discharge capacity, and simultaneously, high-temperature cycle-life characteristics thereof were improved.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

| | | | | |
|---|---|---|---|---|
| | 11: | secondary particle | 12: | inner portion of secondary particle |
| | 13: | primary particle | 14: | outer portion of secondary particle |
| | 100: | rechargeable lithium battery | 112: | negative electrode |
| | 113: | separator | 114: | positive electrode |
| | 120: | battery case | 140: | sealing member |

## Claims

1. A positive electrode active material for a rechargeable lithium battery, comprising
a lithium nickel-based composite oxide,
wherein the positive electrode active material comprises a secondary particle in which a plurality of primary particles is aggregated, wherein at least a portion of the primary particles is arranged radially,
a boron coating layer disposed on the surface of the secondary particles and containing lithium borate, and
a boron-doped layer inside the primary particles exposed to the surface of the secondary particle.

2. The positive electrode active material of claim 1, wherein:
(i) the boron doping layer is disposed within a depth range of 10 nm from the outer surface of the primary particles exposed to the surface of the secondary particle; or
(ii) the boron doping layer is disposed within a depth range of 5 nm from the outer surface of the primary particles exposed to the surface of the secondary particle.

3. The positive electrode active material of claim 1 or claim 2, wherein
the lithium borate of the boron coating layer comprises LiBO₂, Li₃B₇O₁₂, Li₆B₄O₉, Li₃B₁₁O₁₈, Li₂B₄O₇, Li₃BO₃, Li₈B₆O₁₃, Li₅B₃O₇, Li₄B₂O₅, Li₁₀B₄O₁₁, Li₈B₂O₇, or a combination thereof.

4. The positive electrode active material of any one of claims 1 to 3, wherein
a content of the lithium borate in the boron coating layer is 0.02 wt% to 0.5 wt% based on the positive electrode active material.

5. The positive electrode active material of any one of claims 1 to 4, wherein
the positive electrode active material further comprises a grain boundary boron coating portion that is disposed on the surface of the primary particles inside the secondary particle and comprises lithium borate.

6. The positive electrode active material of claim 5, wherein
a weight of the boron coating layer is greater than a weight of the grain boundary boron coating portion.

7. The positive electrode active material of claim 5, wherein
a weight of the boron coating layer is at least 4 times a weight of the grain boundary boron coating portion.

8. The positive electrode active material of claim 5, wherein
the boron coating layer is included in an amount of 70 wt% to 98 wt% and the grain boundary boron coating portion is included in an amount of 2 wt% to 30 wt% based on the total amount of the boron coating layer and the grain boundary boron coating portion.

9. The positive electrode active material of any one of claims 5 to 8, wherein
a content of the boron coating layer is 0.02 wt% to 0.5 wt%, and a content of the grain boundary boron coating portion is 0.001 wt% to 0.05 wt% based on the positive electrode active material.

10. The positive electrode active material of any one of claims 1 to 9, wherein
the primary particles have a plate shape, and at least a portion of the plate-shaped primary particles are radially arranged, optionally wherein:
an average long axis length of the plate-shaped primary particles is 150 nm to 500 nm, an average thickness is 100 nm to 200 nm, and a ratio of an average thickness to an average long axis length is 1:2 to 1:5.

11. The positive electrode active material of any one of claims 1 to 10, wherein
the secondary particle comprises an inner portion and an outer portion surrounding the inner portion, the inner portion comprises an irregular porous structure, and the outer portion comprises radially arranged primary particles, optionally wherein:
the inner portion of the secondary particle has a larger pore than the outer portion,
the inner portion has a pore size of 150 nm to 1 µm, and
an outer portion has a pore size of less than 150 nm.

12. The positive electrode active material of any one of claims 1 to 11, wherein:
(i) the secondary particle comprises open pores having a size of less than 150 nm on the surface and facing toward the center of the secondary particle; and/or
(ii) the lithium nickel-based composite oxide is represented by Chemical Formula 1:
[Chemical Formula 1] Liₐ₁Niₓ₁M¹_{y1}M²_{1-x1-y1}O_{2-z}X_{z}
wherein, in Chemical Formula 1, 0.9≤a1≤1.8, 0.3≤x1≤1, 0≤y1≤0.7, and 0≤z≤0.1, M¹ and M² are each independently Al, B, Ba, Ca, Ce, Co, Cr, Cu, Fe, Mg, Mn, Mo, Nb, Si, Sr, Ti, V, W, Zr, or a combination thereof, and X is F, P, S, or a combination thereof.

13. A method of preparing a positive electrode active material for a rechargeable lithium battery comprising mixing a nickel-based hydroxide, a lithium raw material, and a boron raw material and heat-treating the resultant to obtain the positive electrode active material of any one of claims 1 to 12.

14. The method of claim 13, wherein:
(i) a content of the boron raw material is 0.1 parts by mole to 5 parts by mole based on 100 parts by mole of the nickel-based hydroxide; and/or
(ii) the heat-treating is performed at a temperature of 650 °C to 850 °C for 5 hours to to 25 hours.

15. A rechargeable lithium battery, comprising
a positive electrode including the positive electrode active material of any one of claims 1 to 12, a negative electrode, a separator between the positive electrode and the negative electrode, and an electrolyte.
